# DEMANDE DE BREVET EUROPEEN

(11) **EP 1 492 347 A1**
(43) Date de publication de la demande: **29.12.2004**
(21) Numéro de dépôt: 03405453.6
(22) Date de dépôt: 23.06.2003
(51) Int. Cl.: H04N 7/16, H04N 7/173, H04N 7/167

(54) **Décodeur et système destiné au traitement de données de télévision à péage et procédé pour la gestion d'au moins deux décodeurs**

(71) Demandeur: Nagravision S.A., 1033 Cheseaux-sur-Lausanne (CH)
(72) Inventeur: Goeke, Maxime, 1033 Cheseaux-sur-Lausanne (CH); Uldry, Marc, 1616 Attalens (CH); Hill, Michael John, 1296 Coppet (CH)
(74) Mandataire: Wenger, Joel-Théophile

(57) **Abrégé**

La présente invention concerne un décodeur destiné au traitement de données de télévision à péage. Ce décodeur comporte des moyens d'activation/désactivation du traitement des données de télévision à péage et un compteur agissant sur lesdits moyens d'activation/désactivation.

Elle concerne également un système de gestion de données de télévision à péage comportant au moins deux décodeurs, chaque décodeur contenant des moyens d'activation/désactivation du traitement des données de télévision à péage et un compteur agissant sur lesdits moyens d'activation/désactivation. Le système comprend également au moins deux modules de sécurité destinés à être localement connectés auxdits décodeurs. L'un au moins de ces modules de sécurité est déclaré maître et comprend des moyens pour réinitialiser lesdits compteurs des décodeurs.

L'invention concerne en outre un procédé de gestion d'au moins deux décodeurs destinés au traitement de données de télévision à péage, lesdits décodeurs étant associés à un abonné et comportant des moyens d'activation/désactivation du traitement des données de télévision à péage et un compteur agissant sur lesdits moyens d'activation/désactivation. Chaque abonné dispose également d'au moins deux modules de sécurité pouvant être localement connectés à un décodeur. Le procédé comprend les étapes de détermination d'au moins un module de sécurité maître parmi les modules de sécurité appartenant à un abonné; de mémorisation dans chaque décodeur de l'abonné, d'un élément d'identification du module de sécurité maître; de désactivation par le compteur du décodeur du traitement des données selon au moins un critère prédéfini et de réinitialisation du compteur par l'introduction du module de sécurité maître dans le décodeur désactivé.

## Description

La présente invention concerne un décodeur destiné au traitement de données de télévision à péage. Elle concerne également un système de gestion de données de télévision à péage ainsi qu'un procédé de gestion d'au moins deux décodeurs destinés au traitement de données de télévision à péage.

Généralement, pour pouvoir accéder à un contenu chiffré correspondant à des événements diffusés par des opérateurs de télévision à péage, tels que des films, des matchs de sports ou autre, il faut acquérir un abonnement, un décodeur et un module de sécurité. Certains abonnés souhaitent disposer de plusieurs décodeurs et de plusieurs modules de sécurité pour que plusieurs utilisateurs puissent accéder aux événements diffusés à partir de plusieurs téléviseurs disposés dans des pièces différentes de leur habitation.

Dans ce cas, le prix demandé pour les abonnements, décodeurs et/ou modules de sécurité ultérieurs est généralement inférieur au prix demandé pour le premier abonnement, décodeur et/ou module de sécurité. On cherche toutefois à éviter qu'un abonné n'acquière plusieurs ensembles décodeurs/modules de sécurité, en bénéficiant de la réduction de prix pour les ensembles ultérieurs et qu'il fasse bénéficier un tiers non abonné de cette réduction ou revende ces ensembles à un prix plus bas que le prix d'acquisition normal.

Une solution pour éviter ceci consiste à imposer une manipulation qui est peu contraignante pour un abonné qui dispose réellement de plusieurs décodeurs associés aux modules de sécurité dans son logement, mais qui est par contre très contraignante pour un abonné qui a revendu les décodeurs et les modules de sécurité ou pour l'acheteur de tels modules. De plus, si cette manipulation n'est pas effectuée, les fonctions de déchiffrement du contenu transmis ne sont pas possibles.

Un système permettant d'atteindre en partie ce but est décrit dans le brevet européen publié sous le numéro EP 0 826 288. Ce brevet décrit un système de télévision à péage comprenant plusieurs ensembles de télévisions, chaque ensemble étant lié à un abonné spécifique. Chaque ensemble est formé d'au moins deux décodeurs, chaque décodeur étant associé à une carte à puce destinée à permettre le déchiffrement du contenu envoyé sur les décodeurs liés au système de télévision. Chaque carte à puce contient un certain nombre d'informations qui permettent de l'identifier. Ces informations, appelées "données de chaînage", sont par exemple une signature, une clé ou un autre élément de détermination. Toutes les cartes liées au même abonné ont au moins une des données de chaînage en commun. Des cartes d'abonnés différents n'ont pas de données en commun.

Les cartes à puce de l'abonné, ou au moins l'une d'entre elles, peuvent être désactivées selon des critères prédéfinis. Ces critères peuvent par exemple être une date déterminée ou une durée d'utilisation. Lorsqu'une carte est désactivée, les mots de contrôle ne sont plus déchiffrés. Le contenu envoyé sur le décodeur considéré ne peut plus être déchiffré sans ces mots de contrôle correspondant à des événements diffusés.

Une carte désactivée peut être réactivée si l'abonné dispose d'une carte encore active et d'un décodeur lié au même abonné. Pour réaliser ceci, le système selon cette invention de l'art antérieur fonctionne de la manière suivante.

Les données liées à une carte active sont tout d'abord mémorisées dans le décodeur dans lequel cette carte est introduite. Lorsqu'une carte est désactivée, elle doit être introduite dans un décodeur associé à une carte active de l'abonné. Les données de chaînage telles que la signature, la clé, etc., mémorisées dans le décodeur, sont authentifiées avec les données de chaînage de la carte désactivée. Si ces données concordent, le compteur contenant par exemple la date prochaine de désactivation ou la durée d'utilisation est incrémenté de façon à permettre l'utilisation de la carte pendant un certain temps. Si ces données de chaînage ne concordent pas, le compteur n'est pas réinitialisé dans la carte désactivée, le déchiffrage des mots de contrôle n'est pas possible et l'événement reste chiffré.

Dans ce système, n'importe quel décodeur lié à une carte active de l'abonné peut permettre de réactiver une carte désactivée si les données de chaînage correspondent, c'est-à-dire si elles appartiennent au même abonné. De ce fait, si des cartes de l'abonné ont été vendues à des personnes géographiquement proches de l'abonné initial, les personnes qui ont une carte désactivée peuvent introduire cette carte dans n'importe quel décodeur lié à une carte active de l'abonné pour refaire fonctionner la leur. L'effet dissuasif recherché par l'invention n'est donc que partiellement atteint.

Il existe en outre une manière simple d'éviter les contraintes liées au procédé de ce brevet. Il suffit en effet que l'acheteur d'un ensemble décodeur/carte à puce non autorisé acquiert deux ensembles. Ainsi, il pourra toujours réactiver une carte lorsque celle-ci sera désactivée.

Un autre problème arrive lorsque toutes les cartes sont désactivées. Ceci peut se produire notamment lorsqu'un abonné ne regarde que rarement la télévision ou qu'il est absent entre le moment où la première carte est désactivée et le moment où la dernière est désactivée. Dans ce cas, il n'est plus possible de réactiver une carte et la seule solution consiste à commander une autre carte.

Dans l'invention décrite dans cette publication EP 0 826 288, toutes les informations importantes, c'est-à-dire essentiellement les données de chaînage et les données relatives à la date de désactivation sont mémorisées dans la carte. Les décodeurs jouent uniquement un rôle de "mémoire tampon" pour transférer les informations de chaînage entre une carte active à une autre carte désactivée lors de la procédure de réactivation.

La présente invention se propose d'offrir une solution alternative assurant une sécurité et un contrôle de l'accès aux événements envoyés par l'opérateur. Elle a pour but de permettre la gestion de façon souple, de la durée de fonctionnement d'un décodeur et d'adapter les paramètres de fonctionnement par le module de sécurité à tout instant.

Le dispositif a pour but en outre de gérer chaque abonné de façon globale. Ainsi, un abonné qui revend un ou plusieurs ensembles décodeur/module de sécurité se verra imputer les factures des événements consommés par les utilisateurs de ces ensembles. Ceci augmente fortement l'effet dissuasif recherché dans cette invention.

De plus, l'invention permet également de collecter et de gérer des informations fournies par les ensembles décodeur/module de sécurité, comme par exemple des informations de service ou les données relatives à l'achat impulsif d'événements, aussi bien du point de vue de la facturation que du point de vue des statistiques.

Les buts de l'invention sont atteints par un décodeur destiné au traitement de données de télévision à péage, caractérisé en ce qu'il comporte des moyens d'activation/désactivation du traitement des données de télévision à péage et un compteur agissant sur lesdits moyens d'activation/désactivation.

Ces buts sont également atteints par un système de gestion de données de télévision à péage comportant au moins deux décodeurs, caractérisé en ce que les décodeurs contiennent chacun des moyens d'activation/désactivation du traitement des données de télévision à péage et un compteur agissant sur lesdits moyens d'activation/désactivation, ce système comprenant au moins deux modules de sécurité destinés à être localement connectés auxdits décodeurs, au moins un des modules de sécurité est déclaré maître et comprend des moyens pour réinitialiser lesdits compteurs des décodeurs.

Ces buts sont en outre atteints par un procédé de gestion d'au moins deux décodeurs destinés au traitement de données de télévision à péage, lesdits décodeurs étant associés à un abonné et comportant des moyens d'activation/désactivation du traitement des données de télévision à péage et un compteur agissant sur lesdits moyens d'activation/ désactivation, chaque abonné disposant d'au moins deux modules de sécurité pouvant être localement connectés à un décodeur, ce procédé comprenant les étapes de :
- détermination d'au moins un module de sécurité maître parmi les modules de sécurité appartenant à un abonné,
- mémorisation dans chaque décodeur de l'abonné, d'un élément d'identification du module de sécurité maître,
- désactivation par le compteur du décodeur du traitement des données selon au moins un critère prédéfini,
- réinitialisation du compteur par l'introduction du module de sécurité maître dans le décodeur désactivé.

L'invention sera mieux comprise grâce à la description détaillée qui va suivre et qui se réfère aux dessins annexés donnés à titre d'exemples nullement limitatifs, dans lesquels:
- la figure 1 illustre les éléments placés chez un abonné d'une part et ceux placés chez un diffuseur d'événements de télévision à péage d'autre part;
- la figure 2a est un schéma bloc représentant les opérations liées à l'activation d'un premier décodeur, selon un premier mode de réalisation;
- la figure 2b est un schéma bloc représentant les opérations liées à l'activation d'un deuxième décodeur pour un même abonné, selon le mode de réalisation de la figure 2a;
- La figure 3 est un schéma bloc représentant une partie du fonctionnement du dispositif de l'invention;
- la figure 4a est un schéma bloc représentant les opérations liées à l'activation d'un premier décodeur, selon un deuxième mode de réalisation;
- la figure 4b est un schéma bloc représentant les opérations liées à l'activation d'un deuxième décodeur pour un même abonné, selon le mode de réalisation de la figure 4a;
- La figure 5 représente le système selon l'invention, fonctionnant d'après un troisième mode de réalisation;
- la figure 6a est un schéma bloc représentant les opérations liées à l'activation d'un premier décodeur, selon un troisième mode de réalisation, également illustré par la figure 5;
- la figure 6b est un schéma bloc représentant les opérations liées à l'activation d'un deuxième décodeur pour un même abonné, selon le mode de réalisation de la figure 6a;
- Les figures 7a, 7b, 7c et 7d représentent des architectures possibles du dispositif selon l'invention.

L'invention est décrite ci-dessous en référence à plusieurs modes de réalisation, dans lesquels il est supposé que l'abonné dispose de plusieurs décodeurs STB1, STB2, STB3,... chacun d'eux étant associé à un module de sécurité ICC1, ICC2, ICC3,..., qui peut par exemple être réalisé sous la forme d'une carte à microprocesseur ou carte à puce ou sous la forme d'un boîtier de circuit intégré.

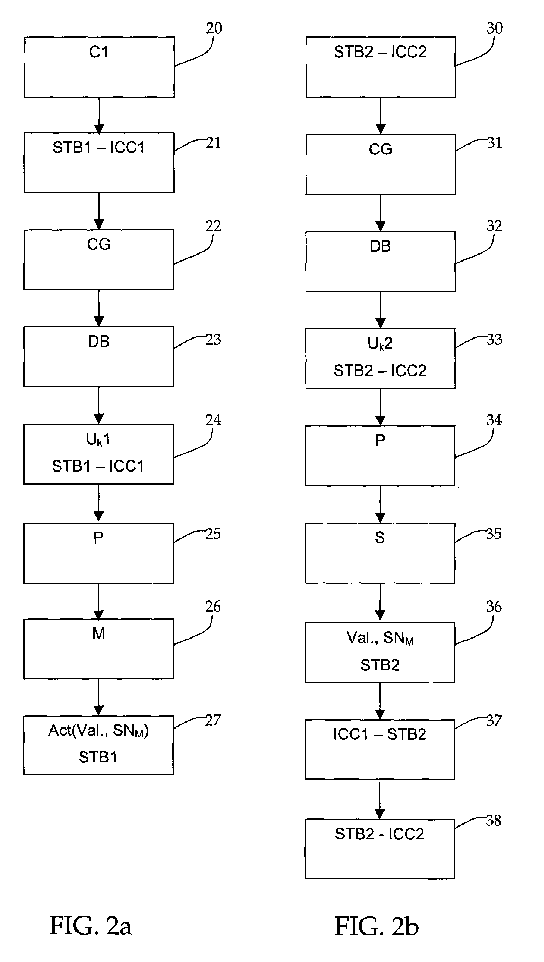

Selon une première forme de réalisation illustrée par les figures 2a et 2b, lorsque l'utilisateur acquiert un premier contrat d'abonnement de télévision à péage, C1, ce qui est illustré par une étape 20 sur la figure 2a, il acquiert également un premier décodeur STB1 associé à un premier module de sécurité ICC1. Ceci est illustré par la référence 21 de la figure 2a. De façon bien connue de l'homme du métier, le module de sécurité gère les droits associés aux événements ainsi que le renvoi de mots de contrôle au décodeur de façon à permettre à celui-ci de traiter les données de télévision à péage et par conséquent, de décoder le contenu chiffré lié à un événement.

Lorsque l'abonné a acquis l'ensemble des éléments nécessaires au décodage d'événements, c'est-à-dire un abonnement, un décodeur et un module de sécurité, il doit en premier lieu, activer ces éléments de façon à les rendre fonctionnels. Sans cette activation, l'ensemble n'est pas en mesure de traiter les données de télévision à péage.

Selon une forme de réalisation concrète, lorsque l'abonné souhaite activer son décodeur STB1 et son module de sécurité ICC1 pour la première fois, il doit appeler un centre de gestion CG et indiquer un numéro d'identification C1 lié à son contrat d'abonnement, un numéro d'identification unique SNₛ lié au module de sécurité, un numéro d'identification unique SN_{d} lié au décodeur et éventuellement son nom (Sub1, Sub2) à des fins de vérification. Ceci est illustré par la référence 22 de la figure 2a. Les numéros d'identification sont également couramment appelés numéros de série. Ces opérations sont généralement réalisées par l'opérateur installant le système chez l'abonné.

Ces informations seront utilisées par le centre de gestion pour enregistrer l'abonné (Sub1, Sub2), en liaison avec le décodeur STB et le module de sécurité ICC qu'il a acquis et pour apparier le décodeur et le module de sécurité. Il est à noter que le décodeur et le module de sécurité peuvent être acquis séparément, de sorte qu'avant l'appel au centre de gestion, celui-ci n'a pas de moyens de savoir quel module de sécurité est associé à un décodeur déterminé.

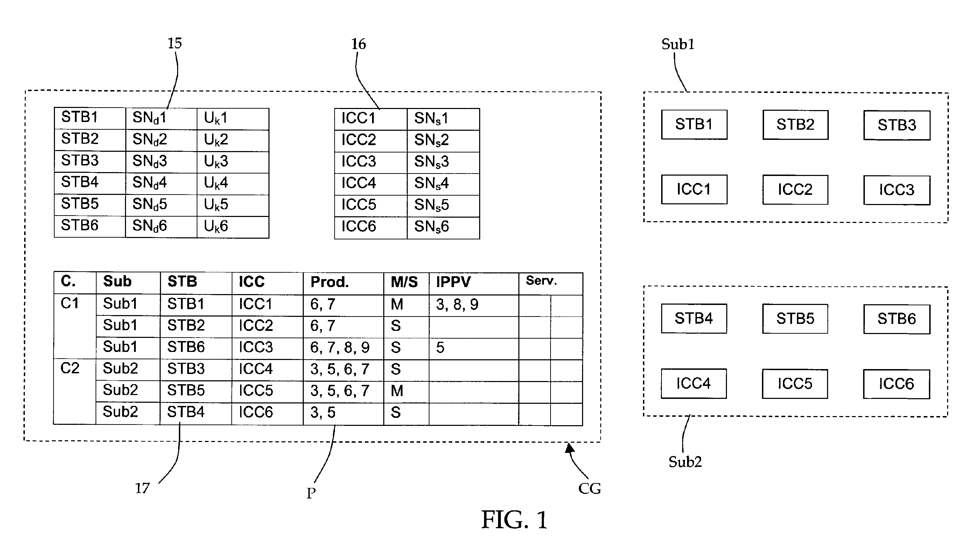

Comme cela est illustré sous la référence générale CG de la figure 1, le centre de gestion contient au moins une base de données dans laquelle sont mémorisées des informations permettant de lier le module de sécurité au décodeur. De façon plus détaillée, le centre de gestion contient, dans sa base de données, le numéro d'identification unique SN_{d} de chaque décodeur STB géré par ce centre. Ce numéro unique est associé à au moins une clé de chiffrement Uₖ (de type symétrique ou asymétrique) qui est différente pour chaque décodeur. Cette clé de chiffrement, dénommée "clé d'appariement" est également mémorisée dans le décodeur lui-même. Lorsque l'abonné a identifié son décodeur au moyen du numéro unique SN_{d} et qu'il a indiqué le numéro unique SNₛ du module de sécurité, le centre de gestion associe, dans la base de données, le module de sécurité au décodeur. Dans la figure 1, le contenu de la base de données est représenté sous la forme de trois tableaux. L'un des tableaux 15 contient la liste de tous les décodeurs STB gérés par le centre de gestion, associés à leur numéro d'identification unique ainsi qu'à leur clé d'appariement Uₖ. Un autre tableau 16 contient la liste de tous les modules de sécurité ICC ainsi que leur numéro d'identification unique SNₛ. Le troisième tableau 17 contient la liste des contrats d'abonnement C1, C2,... et des abonnés Sub1, Sub2,... associés chacun à leurs décodeurs STB d'une part et leurs modules de sécurité ICC d'autre part. Ce tableau contient également la liste des produits P acquis par l'abonné ainsi qu'une indication de fonction de maître M ou d'esclave S dont le rôle est expliqué ci-dessous. Ce tableau 17 peut aussi être utilisé pour mémoriser d'autres informations, dites informations de service, comme cela est également expliqué ci-dessous. Les produits P, c'est-à-dire notamment les événements que l'abonné est autorisé à visionner, peuvent être liés aux contrats d'abonnement ou aux modules de sécurité. Cela signifie que les produits peuvent être les mêmes pour tous les modules de sécurité d'un abonné ou au contraire, peuvent être différents pour des modules différents. Ainsi, il est par exemple possible de limiter les produits accessibles à partir d'un ensemble décodeur/module de sécurité déterminé. Ces produits peuvent être des canaux, des bouquets, des événements comme cela est bien connu de l'homme du métier. L'étape de recherche d'informations et de création de liens dans la base de données porte la référence 23 sur la figure 2a.

La clé de chiffrement Uₖ1 liée au numéro unique SN_{d}1 du décodeur STB1 doit encore être transmise au module de sécurité ICC1 de façon à pouvoir chiffrer les communications entre ce module de sécurité et le décodeur. L'envoi de cette clé est généralement effectué dans un message de gestion EMM chiffré au moyen d'une clé privée globale de l'opérateur, qui est la même pour tous les modules de sécurité gérés par cet opérateur. Le décodeur associé au module de sécurité auquel est destiné ce message peut le recevoir et le transmettre au module de sécurité qui déchiffre le message au moyen de la clé publique globale de l'opérateur et en extrait la clé d'appariement Uₖ1. Cette clé d'appariement est stockée dans une mémoire du premier module de sécurité ICC1 avec le numéro unique du décodeur SN_{d}. L'étape d'appariement porte la référence 24 sur la figure 2a. Dans une étape ultérieure 25, les droits de déchiffrement des produits P tels que déduits du tableau 17 de la base de données sont chargés dans le module de sécurité.

La base de données du centre de gestion attribue au module de sécurité lié à ce premier décodeur, une fonction de maître M, ce qui est représenté par la référence 26 sur la figure 2a.

Lorsque toutes les données ont été introduites dans la base de données et que la clé d'appariement Uₖ1 a été transmise au module de sécurité, le décodeur STB1 doit être activé, pour permettre le décodage, comme cela est illustré dans l'étape 27. Le centre de gestion envoie ensuite une "commande décodeur" à destination du décodeur considéré STB1. Une "commande décodeur" est une commande destinée au décodeur, transmise sous forme de message d'autorisation EMM, et traitée par le module de sécurité du fait que le décodeur ne dispose pas des moyens de sécurité suffisants pour traiter directement cette commande. Le message d'autorisation EMM est transmis sous forme chiffré au moyen de la clé globale de l'opérateur. Ce message est déchiffré par le module de sécurité au moyen de la clé globale. Comme le module de sécurité peut déterminer que cette commande ne le concerne pas, il le chiffre au moyen de la clé d'appariement Uₖ1, puis le renvoie au décodeur qui le déchiffre et applique la commande.

Cette "commande décodeur" contient le numéro d'identification SN_{M} du module de sécurité maître et une valeur de désactivation qui est généralement une valeur temporelle. Ces deux informations sont mémorisées dans le décodeur, la valeur de désactivation étant attribuée à un compteur du décodeur. Il est à noter que dans l'exemple décrit, le numéro d'identification SN_{M} du module de sécurité maître est égal au numéro d'identification du premier module de sécurité SNₛ1 puisque ce premier module de sécurité a la fonction de maître.

A ce stade, le décodeur demande le numéro unique SNₛ du module de sécurité et le compare avec celui reçu dans le message contenant la "commande décodeur". Si ces valeurs sont égales, ce qui est bien entendu le cas si le module d'origine n'a pas été remplacé par un autre module, le décodeur débloque le transfert des messages de contrôle ECM des événements vers le module de sécurité et les mots de contrôle peuvent être déchiffrés. Le compteur du décodeur est également activé. Si l'abonné n'a qu'un seul décodeur et qu'un seul module de sécurité, ceux-ci fonctionnement de manière appariée, comme cela est décrit dans la demande WO 99/57901, et le déchiffrement des événements chiffrés se fait de façon conventionnelle.

Dans la description ci-dessus, les échanges entre le module de sécurité et le décodeur se font de façon chiffrée au moyen de la clé d'appariement Uₖ1. Il est toutefois possible de prévoir que ces échanges sont chiffrés au moyen d'une clé de session, qui est différente de la clé d'appariement, mais qui en découle.

Lorsque l'abonné souhaite acquérir un deuxième décodeur, il doit bien entendu acquérir un deuxième module de sécurité. La mise en service du deuxième décodeur est représentée dans son ensemble par la figure 2b. L'acquisition d'un deuxième décodeur STB2 et d'un deuxième module de sécurité ICC2 est représentée par la référence 30. Comme précédemment, l'abonné doit appeler le centre de gestion CG et indiquer les numéros uniques SN_{d}2 et SNₛ2 du deuxième décodeur STB2 et du deuxième module de sécurité ICC2, le numéro de l'abonnement C1 et éventuellement son nom Sub1 pour vérification, dans une étape 31 de la figure 2b. Les informations nécessaires sont recherchées dans la base de données dans une étape 32 et la base de données est complétée, comme cela est expliqué en référence à la figure 2a. La base de données permet de retrouver la clé d'appariement Uₖ2 qui est mémorisée dans le décodeur STB2. Cette clé d'appariement Uₖ2 est associée dans la base de données au numéro unique SN_{d}2 du deuxième décodeur STB2. Cette clé d'appariement Uₖ2 est envoyée, dans une étape 33, au deuxième module de sécurité ICC2 de façon à permettre une communication chiffrée entre le module de sécurité et le décodeur. Le liste des produits est également envoyée au deuxième module de sécurité ICC2 par le centre de gestion, lors d'une étape 34. Dans la base de données du centre de gestion, une fonction d'esclave S est attribuée au deuxième module de sécurité ICC2 dans une étape 35. Comme précédemment, une "commande décodeur" est envoyée au deuxième décodeur sous forme de message d'autorisation EMM chiffré, cette commande contenant une valeur de désactivation ainsi que le numéro d'identification SN_{M} du module de sécurité maître. Ceci correspond à l'étape 36 de la figure 2b. Comme précédemment, ces deux informations sont mémorisées dans le décodeur, la valeur de désactivation étant attribuée à un compteur de ce décodeur.

A ce stade, le décodeur et son module de sécurité ne sont pas activés, de sorte que le déchiffrement d'événements chiffrés diffusés par l'opérateur n'est pas encore autorisé. Le décodeur et le module de sécurité ayant une fonction d'esclave, ils doivent être activés par le module de sécurité maître ICC_{M}, qui, dans l'exemple ci-dessus, correspond au premier module de sécurité ICC1. Pour ceci, un message est affiché à destination de l'abonné, pour lui demander d'insérer le premier module de sécurité ICC1 ou module de sécurité maître ICC_{M} dans le deuxième décodeur STB2 ou décodeur esclave S. Ceci est représenté par la référence 37 sur la figure 2b. En même temps ou après l'affichage du message, le décodeur envoie une commande au module de sécurité qu'il contient, visant à obtenir le numéro d'identification SNₛ de ce module. Ce numéro est comparé au numéro d'identification du module de sécurité maître SN_{M} provenant du centre de gestion CG et mémorisé dans le deuxième décodeur. Si ces deux numéros concordent, le décodeur active le processus de traitement du flux et met en fonction le compteur de ce décodeur. Il affiche également un message à destination de l'utilisateur, lui demandant de réintroduire le deuxième module de sécurité ICC2 dans le deuxième décodeur STB2. Lorsque ceci est fait, les données de télévision à péage peuvent être traitées et les événements peuvent être visionnés. L'activation du deuxième décodeur STB2, représentée par la référence 38, est alors terminée.

Dans le cas où l'abonné acquiert un troisième ou un n^{éme} décodeur, les opérations se déroulent comme pour le deuxième décodeur. L'abonné s'identifie auprès du centre de gestion CG, indique le numéro unique SN_{d} du décodeur et le numéro unique SNₛ du module de sécurité associé. Ces éléments sont enregistrés comme esclaves S. L'appariement entre le module de sécurité esclave et le décodeur est effectué de façon conventionnelle, de même que le chargement des produits P.

Le décodeur mémorise ensuite une valeur temporelle et le numéro d'identification unique SN1 du module maître contenu dans la "commande décodeur" transmise par le centre de gestion. Cette valeur peut être différente pour chaque paire module de sécurité/décodeur ou être la même pour certains d'entre eux ou pour tous. A ce stade, le décodeur esclave STBn demande le numéro unique du module de sécurité. Si ce numéro est celui du maître, le décodeur est activé. Pour permettre de visionner les événements, il est toutefois nécessaire de réintroduire le module de sécurité esclave correspondant dans le décodeur.

Il est à noter que dans la description, il est supposé que le premier module de sécurité est également le module de sécurité maître, ce qui est bien entendu vrai lorsque l'abonné ne dispose que d'un seul ensemble décodeur/module de sécurité. Par contre, lorsqu'il dispose de plusieurs décodeurs, le premier d'entre eux peut être enregistré comme maître par défaut, mais il est possible de décider d'attribuer à n'importe quel autre décodeur, cette fonction de maître. Pour ceci, la demande doit être faite auprès du centre de gestion qui va donc adapter les paramètres dans la base de données, dans les modules de sécurité affectés et dans tous les décodeurs. Seul un module de sécurité d'un abonné déterminé se voit attribuer la fonction de maître, tous les autres modules de sécurité étant considérés comme esclave.

En suivant les procédures expliquées ci-dessus, les différents ensembles décodeur/module de sécurité de l'abonné permettent de déchiffrer et de visionner des événements de télévision à péage. La valeur temporelle de désactivation mémorisée dans un compteur de chaque décodeur est utilisée pour empêcher le déchiffrement selon certains critères, en particulier après un certain temps.

Dans un premier exemple de réalisation, il est supposé que la valeur temporelle de désactivation corresponde à une durée, par exemple 30 jours. Le décodeur est donc désactivé après cette durée de 30 jours. La valeur de désactivation est mémorisée dans le compteur de chaque décodeur.

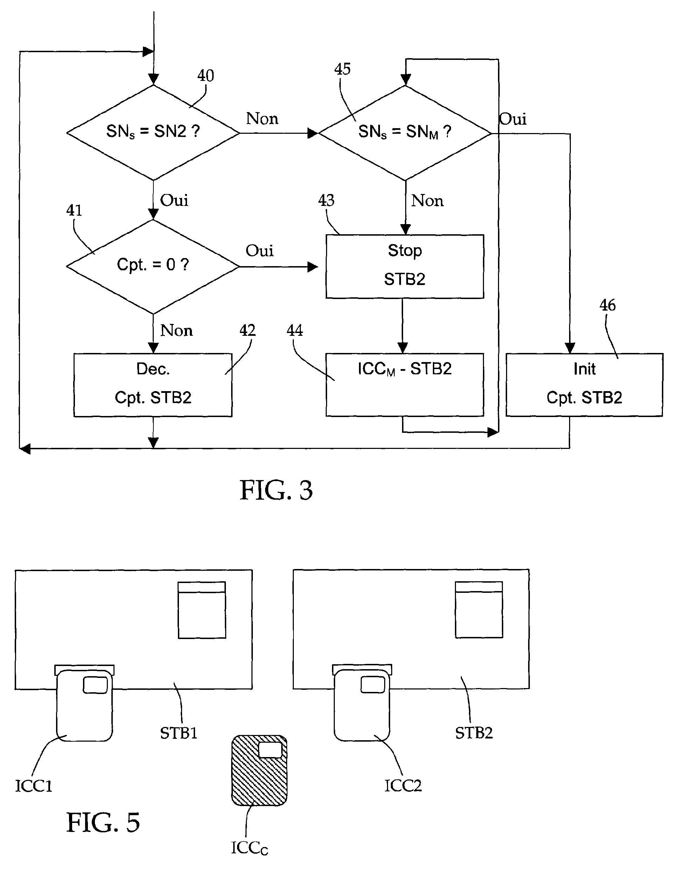

En fonctionnement normal, c'est-à-dire lorsque le module de sécurité est introduit dans le décodeur correspondant, la valeur du compteur mémorisée dans le décodeur est décrémentée à intervalles réguliers, par exemple chaque jour ou chaque heure, d'un nombre d'unités tel que le compteur atteint une valeur nulle lorsque la durée prédéterminée est écoulée. Il est aussi possible de prévoir que le compteur est incrémenté jusqu'à ce qu'il atteigne une valeur prédéterminée. Ceci est illustré par la figure 3. Dans cette figure, il est supposé que le module de sécurité ICC1 est le module maître et que le module ICC2 est esclave. Les décodeurs STB1 et STB2 sont respectivement associés aux modules ICC1 et ICC2. Dans une étape 40, le décodeur interroge à intervalles réguliers, le module de sécurité qu'il contient pour déterminer son numéro d'identification SNₛ. Si ce numéro est égal au numéro d'identification du deuxième module de sécurité SN2, il est vérifié, dans une étape 41, si la valeur du compteur est nulle. Si ce n'est pas le cas, le compteur du deuxième décodeur est décrémenté selon une règle prédéfinie. Ceci est réalisé dans une étape 42 de la figure 3.

Si cette valeur de compteur est nulle ou a atteint une valeur prédéterminée, ce qui est illustré par la référence 43, l'abonné ne peut plus visionner les événements. Pour ceci, plusieurs possibilités peuvent être mises en oeuvre. Il est possible de forcer le décodeur à bloquer la transmission des messages de contrôle ECM contenant les données relatives aux événements vers le module de sécurité, de sorte que ces messages n'arrivent pas au module de sécurité. Il est également possible de forcer le décodeur à ne pas recevoir les mots de contrôle déchiffrés envoyés en retour par le module de sécurité. Une autre possibilité consiste à bloquer la transmission du son et des images provenant du décodeur. Dans ce cas, le déchiffrement est effectué normalement, mais l'utilisateur ne reçoit rien sur son écran de téléviseur. Dans tous les cas, c'est le décodeur qui est en charge du blocage de l'affichage des événements.

Lorsque la valeur du compteur est nulle ou a atteint une valeur prédéfinie, il est nécessaire de réactiver l'ensemble pour permettre le déchiffrement des événements. Il est à noter que selon le mode de réalisation, il n'est pas nécessaire d'attendre que la valeur soit nulle pour réactiver l'ensemble. Il est possible d'effectuer une réactivation plus rapidement, de façon à réinitialiser la valeur du compteur et éviter ainsi sa mise à zéro. A cet effet, le décodeur peut disposer de moyens pour indiquer l'avancement de ce compteur.

La réactivation d'un décodeur désactivé du fait que le compteur a atteint une valeur nulle se passe de la façon suivante. Supposons que le compteur du deuxième décodeur STB2 ait atteint une valeur nulle ou une valeur prédéfinie de sorte qu'il est désactivé. Le module de sécurité ICC2 apparié au décodeur désactivé est retiré de ce décodeur. Le module de sécurité maître ou premier module de sécurité ICC1, est introduit dans ce décodeur dans une étape 44 de la figure 3. Le décodeur esclave STB2 envoie une commande en vue d'obtenir le numéro d'identification unique du module de sécurité qui est dans ce décodeur. Celui-ci vérifie ensuite si le numéro d'identification unique SNₛ du module de sécurité maître est identique au numéro d'identification SN_{M} que le décodeur a mémorisé lors de son initialisation. Ceci est effectué dans une étape 45 de la figure 3. Si ces numéros correspondent, le compteur du décodeur est réinitialisé dans une étape 46 et une nouvelle valeur temporelle de désactivation est introduite dans ce compteur. Cette valeur de désactivation est généralement la valeur mémorisée dans le décodeur. Il est à noter que la valeur mémorisée dans le décodeur peut être modifiée au moyen d'un message d'autorisation EMM envoyé par le centre de gestion. Dans ce cas, la nouvelle valeur mémorisée dans le décodeur s'applique à chaque réactivation. Elle peut également être une valeur reçue directement du centre de gestion par un message d'autorisation EMM adressé au module de sécurité. Si cette nouvelle valeur n'est pas mémorisée dans le décodeur, elle s'applique uniquement pour la réactivation en cours. Le module de sécurité maître peut ensuite être retiré et le module de sécurité esclave ICC2 apparié à ce décodeur peut être réintroduit pour décoder le contenu chiffré envoyé par l'opérateur. Si le numéro d'identification du module maître ne correspond pas, le compteur n'est pas réinitialisé et les événements ne peuvent pas être visionnés. Les instructions pour l'abonné sont de préférence affichées à l'écran du téléviseur associé au décodeur désactivé de sorte que l'abonné n'a qu'à effectuer les opérations étape par étape.

Dans une forme de réalisation préférée, il n'est pas nécessaire d'attendre qu'un message apparaisse sur l'écran du téléviseur pour générer la réinitialisation du compteur. Ceci peut en effet se faire à tout moment en introduisant le module de sécurité maître dans l'un des décodeurs esclaves.

Selon une option, il est possible d'incrémenter le compteur "manuellement" d'une valeur correspondant à une durée relativement courte, par exemple 2 heures. Ceci permet de laisser à l'utilisateur le temps de finir de visionner un événement en cours malgré le fait que le compteur du décodeur considéré ait atteint une valeur nulle. Selon une autre option, il est également possible d'afficher un message d'avertissement à destination de l'abonné, lui indiquant que le module de sécurité peut encore fonctionner pendant une durée relativement courte, par exemple 48 heures. Ceci peut être réalisé en déterminant, à intervalles réguliers, la valeur du compteur. L'abonné dispose donc d'un certain temps pour incrémenter le compteur en introduisant le module de sécurité maître avant que le module de sécurité ne soit désactivé.

Le premier module de sécurité associé au premier décodeur, auquel est attribué le statut de maître fonctionne de manière identique aux modules esclaves. Toutefois, comme généralement, ce premier module de sécurité est placé dans le premier décodeur, le compteur est réinitialisé à intervalles réguliers. En utilisation normale, lorsque ce compteur tombe à zéro, il est immédiatement réinitialisé par le module de sécurité maître. Le module de sécurité maître et le décodeur associé peuvent donc normalement toujours déchiffrer les événements.

Selon une variante de réalisation, le décodeur envoie à intervalles réguliers, une commande visant à obtenir le numéro d'identification unique du module de sécurité qui est introduit dans ce décodeur. Si ce numéro d'identification est celui du module maître, le compteur est réinitialisé. Dans ce cas, le décodeur lié au module maître ne tombe jamais à zéro en utilisation normale, c'est-à-dire lorsque le module de sécurité maître est placé dans le décodeur correspondant.

Cette variante est avantageuse également pour l'utilisateur de décodeurs liés à des modules de sécurité esclaves puisqu'elle permet de réinitialiser un compteur à tout moment, quelle que soit la valeur réelle contenue dans le compteur. Dans ce cas, il est possible de laisser le module de sécurité maître dans l'un des décodeurs liés à un module esclave jusqu'à ce que la prochaine commande de recherche du numéro d'identification soit générée par le décodeur. Il est également possible de prévoir une activation manuelle de cette commande par l'utilisateur ou une commande automatique qui est lancée dès qu'un module de sécurité est introduit dans un décodeur.

Il est également possible de prévoir que l'intervalle entre deux commandes d'obtention du numéro d'identification soit relativement grand lorsque la valeur du compteur est élevée, puis diminue lorsque cette valeur de compteur diminue. Ainsi, si un message d'avertissement informe l'abonné que le module de sécurité maître doit être introduit dans un décodeur donné dans un délai relativement court pour éviter que le compteur ne tombe à zéro, l'abonné ne devra laisser son module de sécurité maître dans le décodeur à réinitialiser que jusqu'à ce que la prochaine commande d'obtention du numéro d'identification soit émise par ce décodeur. Cette durée peut typiquement être de l'ordre de quelques centaines de millisecondes.

Dans une autre variante de réalisation, le compteur contient une date déterminée. Le flux de données envoyé par le centre de gestion au décodeur contient un signal représentant l'heure et la date, ce signal étant connu sous l'acronyme TDT (Time & Date Table). Le décodeur esclave compare, à intervalles réguliers, la valeur du compteur à la valeur courante de la date, données par le signal TDT. Aussi longtemps que la date du compteur est postérieure à la date courante, le décodeur esclave fonctionne de façon conventionnelle, c'est-à-dire que le déchiffrement du contenu peut être réalisé.

Lorsque la date effective, envoyée par le signal TDT est postérieure ou égale à la date du compteur, le décodeur bloque le transfert des messages de contrôle ECM au module de sécurité de sorte que le contenu des événements ne peut plus être déchiffré. Il est à noter que, comme précédemment, le compteur peut être incrémenté manuellement de quelques heures, pour éviter qu'une manipulation de mise à jour ne doive être exécutée lorsque l'abonné est en train de visionner un événement. Un message est affiché à destination de l'abonné, ce message demandant à l'abonné d'insérer le module de sécurité maître dans le décodeur esclave.

Selon une variante de réalisation, le compteur comprend une valeur numérique qui correspond à un certain nombre d'impulsions temporelles. Le flux de données dans lequel sont contenus les événements comporte des informations temporelles envoyées à intervalles réguliers. Chaque fois que le décodeur reçoit une impulsion, il décrémente le compteur par exemple d'une unité. Il est également possible de faire varier l'intervalle entre deux impulsions de façon à ajuster l'intervalle entre deux réactivations.

Dans ces variantes, le centre de gestion peut chiffrer les valeurs du compteur dans une "commande décodeur" spécifiquement adressée à un module de sécurité ou à un groupe de modules. Le module de sécurité auquel cette commande est adressée déchiffre ce type de commande et la renvoie, chiffrée avec la clé d'appariement, au décodeur qui applique la commande qui lui est destinée et donc modifie la valeur du compteur en conséquence.

Comme décrit précédemment, l'incrémentation du compteur des décodeurs esclaves est effectuée d'après une valeur temporelle mémorisée dans le décodeur à réinitialiser. Il est également possible d'envoyer un message d'autorisation EMM à destination d'un décodeur particulier, dans une "commande décodeur", imposant une valeur temporelle de désactivation à ce décodeur. Dans ce cas, cette nouvelle valeur ne s'applique qu'à ce décodeur ou aux décodeurs auquel le message est destiné. Cette façon de faire permet par exemple de désactiver avec effet immédiat, un décodeur qui est suspecté d'avoir été vendu sans autorisation.

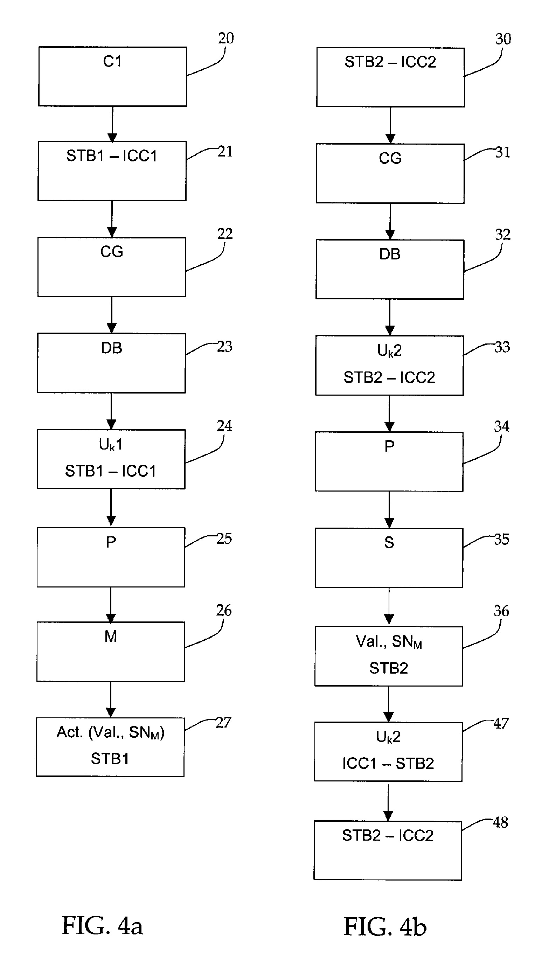

Dans une deuxième forme de réalisation de l'invention, illustrée par les figures 4a et 4b, lorsque l'utilisateur acquiert un premier contrat d'abonnement de télévision à péage, C1, il acquiert également comme précédemment, un premier décodeur STB1 associé à un premier module de sécurité ICC1. L'activation de l'ensemble décodeur/module de sécurité se passe exactement comme ce qui a été décrit en référence à la figure 2a. Les références de cette figure 4a sont donc les mêmes que celles de la figure 2a.

En résumé, les données liées à l'utilisateur, à son premier décodeur et son premier module de sécurité sont recherchée dans la base de données DB du centre de gestion CG. La clé d'appariement Uₖ1 est transmise au module de sécurité de même que les produits et la fonction de maître. Une "commande décodeur" contenant une valeur temporelle de désactivation ainsi que le numéro d'identification du module de sécurité maître est envoyée au décodeur. L'ensemble est activé de sorte qu'il est possible de déchiffrer des données et de visionner des événements.

Lorsque l'abonné souhaite acquérir un deuxième décodeur, il doit bien entendu acquérir un deuxième module de sécurité. La mise en service du deuxième décodeur est représentée dans son ensemble par la figure 4b. Dans une première partie du procédé, à savoir dans les étapes portant les références 30 à 36, cette mise en service se déroule de façon identique à ce qui a été décrit en référence à la figure 2b. L'abonné appelle donc le centre de gestion, qui recherche les informations pertinentes dans sa base de données. L'appariement entre le deuxième module de sécurité ICC2 et le deuxième décodeur STB2 est effectué de façon conventionnelle par la transmission au module de sécurité de la clé d'appariement Uₖ2. Les droits associés aux produits sont également transmis comme précédemment, puis une "commande décodeur" contenant une valeur temporelle de désactivation et le numéro d'identification du module de sécurité maître est envoyée au décodeur.

L'étape 47 suivante diffère de l'étape décrite dans le mode de réalisation de la figure 2b. En effet, dans cette étape 47, on réalise un appariement entre le module de sécurité maître ICC_{M} ou premier module de sécurité ICC1 et le deuxième décodeur STB2. Pour ceci, un message est affiché à destination de l'abonné, pour lui demander d'insérer le premier module de sécurité ICC1 ou module de sécurité maître M dans le deuxième décodeur STB2 ou décodeur esclave S. Durant cette phase d'activation, le centre de gestion CG envoie au module de sécurité maître un message chiffré par la clé globale de l'opérateur, ce message contenant la clé d'appariement Uₖ2 entre le deuxième décodeur STB2 et le deuxième module de sécurité ICC2. Cette clé est donc utilisée pour chiffrer les communications du deuxième décodeur STB2 aussi bien avec le premier module de sécurité ICC1 qu'avec le deuxième module de sécurité ICC2. Cette clé est stockée dans une table d'appariement mémorisée dans le module de sécurité maître.

A ce stade, le décodeur esclave STB2 demande le numéro unique du module de sécurité. Si ce numéro est celui du module maître SN_{M}, le décodeur active le processus de traitement du flux de données et les événements peuvent être visionnés. L'activation du deuxième décodeur STB2, représentée par la référence 47, est alors terminée. Il est à noter que pour visionner un événement, il faut réintroduire le deuxième module de sécurité ICC2 dans le deuxième décodeur STB2, ce qui correspond à une étape 48 de la figure 4b. Il est envisageable de laisser la possibilité au module de sécurité maître de déchiffrer des événements à partir de n'importe quel décodeur, mais en pratique, cela n'est pas souhaité. Le déchiffrement est généralement autorisé lorsqu'un décodeur est associé à un seul module de sécurité et inversement.

Dans le cas où l'abonné acquiert un troisième ou un n^{ième} décodeur, les opérations se déroulent comme pour le deuxième décodeur. L'abonné s'identifie auprès du centre de gestion CG, indique le numéro unique SN_{d} du décodeur et le numéro unique SNₛ du module de sécurité associé. Ces éléments sont enregistrés comme esclaves S. Le chargement des produits P et l'appariement entre le n^{ième} décodeur STBn et le n^{ième} module de sécurité ICCn sont effectués de façon conventionnelle au moyen d'une clé d'appariement Uₖn. Un appariement est ensuite réalisé entre le décodeur considéré STBn et le module de sécurité maître ICC_{M} ou premier module de sécurité ICC1, au moyen de la clé d'appariement Uₖn. Le décodeur mémorise ensuite une valeur temporelle et le numéro d'identification unique SN1 du module maître contenu dans la "commande décodeur" transmise par le centre de gestion dans la commande de décodeur. Cette valeur peut être différente pour chaque paire module de sécurité/décodeur ou être la même pour certains d'entre eux ou pour tous. L'activation de l'ensemble module/décodeur est réalisée au moyen du module de sécurité maître. Le déchiffrement des événements est possible lorsque le n^{ième} module de sécurité ICCn est de nouveau introduit dans le n^{ième} décodeur STBn.

La désactivation des décodeurs, dans ce mode de réalisation, se passe de manière identique à ce qui a été expliqué en référence aux figures 2a et 2b.

Pour l'essentiel, la réactivation d'un décodeur est similaire dans le mode de réalisation décrit par les figures 4a et 4b et dans celui décrit par les figures 2a et 2b. Toutefois, dans celui des figures 4a et 4b, le décodeur ne se contente pas de vérifier le numéro d'identification unique du module de sécurité maître. On effectue en effet une véritable authentification de ce module. Différentes méthodes d'authentification sont possibles. L'une d'elles est décrite ci-dessous. Le décodeur esclave, par exemple STB2, génère un nombre aléatoire qu'il envoie en clair au module de sécurité maître, par exemple ICC1. Celui-ci le chiffre avec la clé d'appariement Uₖ2 destinée à chiffrer les communications entre ce décodeur STB2 et le module maître ICC1. Il renvoie ensuite le nombre chiffré au décodeur STB2 qui le déchiffre avec la clé d'appariement Uₖ2 et le compare au nombre initial. Parallèlement, une authentification en sens inverse peut également être réalisée. Dans ce cas, le module de sécurité maître génère un nombre aléatoire, l'envoie en clair au décodeur qui le chiffre avec la clé d'appariement Uₖ2 et le revoie au module de sécurité. Celui le déchiffre et le compare au nombre initial. Si la comparaison indique que les deux valeurs sont identiques, le compteur est réinitialisé et il est de nouveau possible de visualiser les événements. Dans le cas contraire, le traitement des données n'est pas autorisé.

Ce mode de réalisation permet d'assurer une meilleure sécurité contre l'utilisation indue d'un module de sécurité incorrect.

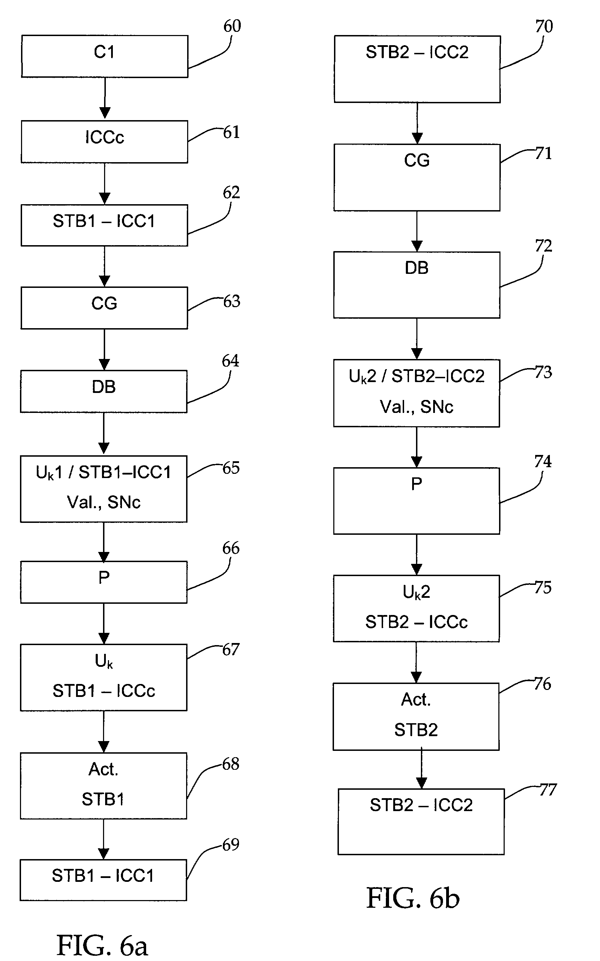

Les figures 5, 6a et 6b décrivent un mode de réalisation particulier dans lequel l'abonné dispose d'un module de sécurité supplémentaire par rapport au nombre d'ensembles décodeur/module de sécurité.

Comme cela est illustré par la référence 60 sur la figure 6a, un utilisateur de services de télévision à péage doit tout d'abord acquérir un contrat C1. Lorsque l'abonné acquiert un premier décodeur STB1, il acquiert également, comme précédemment, un premier module de sécurité ICC1, ce qui est représenté par une étape 62 sur la figure 6a. En même temps que l'abonnement, il acquiert en outre, lors d'une étape 61, un module de sécurité supplémentaire, dénommé "module contrat" ICC_{C}. Selon une réalisation avantageuse, ce module contrat peut être facilement distingué des autres modules de sécurité, par exemple en utilisant une couleur différente, comme cela est représenté par la figure 5.

Comme dans le mode de réalisation précédent, le centre de gestion CG contient une base de données ayant le numéro d'identification unique SN_{d} des décodeurs et une clé d'appariement Uₖ associé à ce numéro. Au cours d'une étape 63 sur la figure 6a, lorsqu'un nouvel abonné appelle le centre de gestion pour initialiser son décodeur, il devra indiquer un numéro d'identification unique SN_{C} du module contrat, un numéro d'identification unique SNₛ du premier module de sécurité, un numéro d'identification du décodeur SN_{d} et un numéro du contrat. Ces indications permettront de lier les données attachées au module de sécurité aux données attachées au décodeur dans la base de données. Cette étape porte la référence 64.

Lorsque ces indications ont été introduites dans la base de données, il est demandé à l'abonné d'introduire le premier module de sécurité ICC1 dans le décodeur STB1. Ceci correspond à la référence 65. Lorsque ceci est fait, le centre de gestion envoie un message d'appariement et un message d'initialisation. Le message d'appariement contient la clé d'appariement Uₖ1 entre le premier décodeur STB1 et le premier module de sécurité ICC1. Le message d'initialisation contient une valeur temporelle de désactivation ainsi que le numéro d'identification unique ICC_{C} du module contrat. La valeur de désactivation est mémorisée dans le premier décodeur. Les droits relatifs aux produits P que l'abonné est autorisé à déchiffrer sont ensuite chargés dans le premier module de sécurité au cours d'une étape 66.

Lorsque ces indications ont été introduites dans la base de données, il est demandé à l'abonné d'introduire le module contrat ICC_{C} dans le premier décodeur STB1, ce qui correspond à une étape 67. Ce module contrat et ce premier décodeur sont alors appariés, au moyen de la clé d'appariement Uₖ1 mémorisée dans la base de données, cette clé permettant d'apparier d'une part le premier décodeur STB1 avec le premier module de sécurité ICC1 et d'autre part, le premier décodeur STB1 avec le module de sécurité contrat ICC_{C}. Cet appariement est effectué de la même façon que décrit précédemment. Il est à noter qu'en règle générale, le module contrat ne permet pas de déchiffrer un contenu chiffré. Lorsque l'appariement entre le module de sécurité et le premier décodeur est terminé, il est demandé à l'utilisateur d'introduire de nouveau le premier module de sécurité ICC1 dans ce décodeur. Une commande d'activation est envoyée sous la forme d'une "commande décodeur" à ce premier décodeur STB1 lors d'une étape 68, pour activer le premier ensemble décodeur/module de sécurité et permettre ainsi le déchiffrement des événements. Le premier module de sécurité ICC1 doit encore être introduit dans le décodeur lors d'une étape 69, pour permettre le traitement des données.

Lorsque l'abonné acquiert un deuxième décodeur STB2 associé à un deuxième module de sécurité ICC2, comme illustré par la référence 70 sur la figure 6b, il doit contacter le centre de gestion lors d'une étape 71. Au cours d'une étape 72, les données liées à l'abonné et à l'ensemble décodeur/module de sécurité sont mises à jour. Le deuxième décodeur STB2 est ensuite apparié, lors d'une étape 73, avec le deuxième module de sécurité ICC2 de la manière décrite ci-dessus. Une "commande décodeur" est envoyée au décodeur, cette commande contenant une valeur temporelle de désactivation, qui peut être identique ou différente de la valeur de désactivation du premier décodeur, ainsi que le numéro d'identification unique SN_{c} du module contrat. Les droits liés aux produits P du deuxième module de sécurité sont chargés lors d'une étape 74. Le deuxième module de sécurité est retiré du décodeur et le module contrat ICC_{c} y est introduit. Ces deux éléments sont appariés au moyen de la clé d'appariement Uₖ2 contenue dans la base de données. Cet appariement est effectué au cours d'une étape 75. La clé d'appariement entre le deuxième décodeur et le deuxième module de sécurité est la même que la clé d'appariement entre le décodeur et le module de sécurité contrat. Le compteur du deuxième décodeur est activé lors d'une étape 76.

Le module contrat est ensuite retiré du décodeur et le deuxième module de sécurité ICC2 y est de nouveau introduit dans une étape 77. A ce stade, il est possible de visionner les événements chiffrés.

La procédure d'activation d'un troisième ou n^{ième} ensemble décodeur/module de sécurité est identique à celle expliquée ci-dessus pour le deuxième ensemble.

Comme mentionné précédemment, en général, le module contrat n'est pas prévu pour pouvoir déchiffrer un contenu chiffré. Il est toutefois envisageable au contraire, de réaliser un module contrat qui soit capable de déchiffrer le contenu chiffré à partir de n'importe lequel des décodeurs appartenant à un abonné déterminé, ou de restreindre les capacités de déchiffrement à un ou plusieurs décodeurs donnés. Le choix dépend essentiellement de l'opérateur qui diffuse le contenu chiffré.

En supposant comme précédemment que la valeur temporelle de désactivation du module de sécurité est une durée d'utilisation, le compteur est décrémenté à intervalles réguliers. Lorsqu'il arrive à zéro, le déchiffrement du contenu est bloqué et un message est affiché pour l'utilisateur. Ce message indique à l'abonné qu'il doit réactiver son ensemble décodeur/module de sécurité. Pour ceci, il doit tout d'abord retirer le module de sécurité du décodeur en question, puis y introduire le module contrat ICC_{M}. Une authentification de ce module contrat est faite, soit en vérifiant simplement le numéro d'identification unique, soit en effectuant une véritable authentification au moyen d'un nombre aléatoire, comme décrit précédemment. La réinitialisation du compteur se fait de la même manière que celle décrite en utilisant le premier module de sécurité comme module maître.

Comme mentionné précédemment, le module de sécurité maître ICC_{M} ou le module contrat ICC_{C} contient une table de clés d'appariement. Cette table permet de mémoriser la clé d'appariement entre le module maître et chaque décodeur d'un abonné déterminé. En dehors de ces clés, la table peut également contenir d'autres informations telles que des informations relatives aux événements "consommés" et des informations de service. De telles informations sont respectivement illustrées par les colonnes IPPV et Serv. du tableau 17 de la figure 1. Ces colonnes représentent les informations normalement mémorisées dans les modules de sécurité, après leur transfert au centre de gestion.

Les informations relatives aux événements consommés contiennent notamment le nombre et l'identification des événements acquis par achat impulsif (connu sous l'acronyme IPPV = Impulsive pay-per-view). Actuellement, lorsque l'achat impulsif d'événements est possible, un crédit destiné à cet achat impulsif est mémorisé dans le module de sécurité. Ce crédit est décrémenté d'un montant correspondant au prix d'un événement déterminé chaque fois qu'un tel événement est acquis par achat impulsif. Lorsque le crédit initial est consommé, l'abonné doit appeler le centre de gestion et demander une réinitialisation de son crédit.

En utilisant le système selon l'invention, la gestion des IPPV peut se passer de deux manières différentes. La première manière est celle décrite ci-dessus, c'est-à-dire que l'utilisateur appelle le centre de gestion pour commander un événement. En pratique, il peut le commander en indiquant son choix à un opérateur ou il peut par exemple utiliser des touches d'une télécommande.

La deuxième manière fonctionne comme suit. Lors d'un achat impulsif, les données relatives à cet achat, c'est-à-dire en particulier l'identification de l'événement et son prix, sont mémorisées. Ils peuvent être stockés dans le module de sécurité ICC ou dans le décodeur STB. Lorsque le module de sécurité maître est introduit dans un décodeur, en particulier dans le but d'incrémenter le compteur de ce décodeur, les données, notamment mais pas exclusivement celles concernant les IPPV, sont transmises au module de sécurité maître ou contrat. Dans le cas où les données sont stockées dans le décodeur, elles peuvent être transférées directement dans ce module maître, sous forme chiffrée ou en clair. Dans le cas où les données sont mémorisées dans le module de sécurité, elles doivent tout d'abord être transférées dans une zone de mémoire tampon du décodeur. Lorsque le module de sécurité maître est introduit dans le décodeur, ces données sont introduites dans la table du module maître. Lorsque ces données ont été transférées au module maître, le compteur peut être réinitialisé.

Cette opération de "récolte" des données par le module maître ou par le module contrat se fait de la même manière pour tous les modules esclaves. De cette façon, le module de sécurité maître contient les informations pertinentes provenant de l'ensemble des modules appartenant à un abonné déterminé. Lorsque le module de sécurité maître est introduit dans un décodeur comportant un modem connecté à une ligne de retour, que ce soit par câble ou par réseau téléphonique public, certaines données ou la totalité d'entre elles sont envoyées au centre de gestion. Généralement, ces données sont envoyées sous forme chiffrées. Le centre de gestion disposant de toutes les clés, il peut déchiffrer aisément le contenu du message. Il est ainsi possible de connaître exactement le contenu des événements consommés par l'abonné, ceci pour chaque décodeur individuel, ce qui permet de facturer de façon globale l'ensemble des événements. Lorsque ces données ont été transmises au centre de gestion, celui-ci peut notamment connaître le montant du solde de crédit sur chaque module de sécurité. De cette façon, il peut également incrémenter ce solde de façon à permettre à l'utilisateur d'effectuer de nouveau un achat impulsif. Cela permet également de gérer avec souplesse et fiabilité, les crédits attribués à chaque abonné.

La connaissance précise des événements consommés par chaque abonné et par chaque décodeur d'un abonné offre de nombreux avantages. D'une part, comme mentionné précédemment, les crédits attribués à l'achat impulsif sont très faciles à gérer. D'autre part, il est possible de réaliser toutes sortes de statistiques, telles que par exemple la durée d'utilisation de chaque décodeur pour chaque canal. Ceci permet notamment de déterminer quels sont les produits consommés et de payer des redevances en fonction de la consommation réelle et non plus basées sur des estimations. Ceci permet également de réaliser un profil précis pour chaque décodeur et ainsi, de proposer aux utilisateurs de ces décodeurs, des événements ou des produits qui correspondent à ces attentes.

La table peut également contenir des informations de service. Celles-ci peuvent par exemple décrire le niveau de réception du signal, ce qui permet notamment d'envoyer une information à l'utilisateur si l'orientation de son antenne n'est pas optimale et qu'il doit contacter un technicien. Ceci permet aussi de positionner de façon précise, une antenne d'un satellite de télécommunication de façon à avoir une zone de réception optimale. D'autres informations de services peuvent par exemple décrire la durée d'utilisation d'un décodeur ou toute sorte d'autres informations qui peuvent s'avérer utilises pour obtenir un fonctionnement optimal du système et pour réaliser des statistiques, comme cela a été décrit précédemment. Les informations de service peuvent également contenir des données relatives à des versions de logiciels ou des dates de modification de ces logiciels.

Ces informations sont également récoltées par le module de sécurité maître ou contrat, puis transmises au centre de gestion lorsque ce module est introduit dans un décodeur lié à un modem connecté.

Lorsque le parc de décodeurs de l'abonné ne comporte pas de modem ou qu'aucun d'entre eux n'est connecté à une ligne téléphonique, il est possible de demander à l'abonné d'envoyer le module de sécurité contrat par courrier. Dans ce cas, le centre de gestion qui demande l'envoi de ce module peut s'arranger pour qu'aucune interruption des fonctions de déchiffrage ne se produise pendant toute la durée pendant laquelle ce module est hors du domicile de cet abonné. Ceci peut être réalisé en contrôlant les valeurs temporelles de désactivation et en incrémentant celles qui risquent de tomber à zéro pendant la période où l'abonné ne dispose plus de son module contrat. Le centre de gestion peut incrémenter le crédit de l'abonné puisqu'il connaît exactement la somme qui a été consommé.

Le fait de recevoir toutes les informations de tous les décodeurs enregistrés au nom d'un même abonné présente l'avantage de générer une seule facture pour les événements consommés pour chaque abonné. Ceci comporte en outre un effet dissuasif, tel que mentionné dans le but de l'invention, puisqu'un abonné qui aurait revendu son ensemble module de sécurité / décodeur à un autre utilisateur, recevrait la facture de cet autre utilisateur. De plus, dans le cas où l'achat impulsif est possible, l'abonné ne pourrait pas contrôler le volume des achats impulsifs consommés par l'autre utilisateur et se verrait attribuer les montants correspondants sur sa facture.

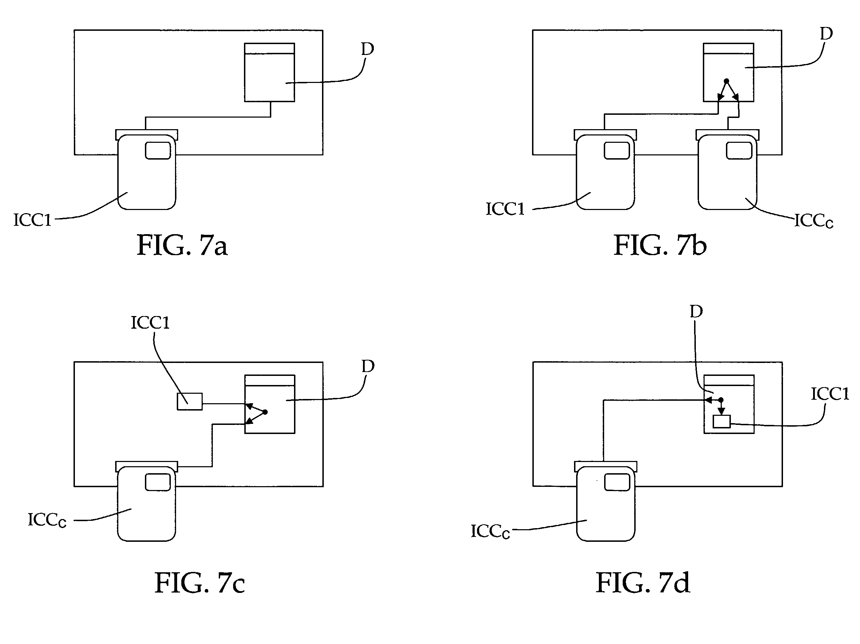

Les figures 7a à 7d illustrent différentes architectures de décodeur qui peuvent être utilisées dans le dispositif de l'invention. Le dispositif de la figure 7a illustre un décodeur conventionnel comportant un module de décodage D interne et un module de sécurité ICC1 amovible. Cette architecture est la plus courante et correspond à la description ci-dessus.

La figure 7b représente un décodeur tel qu'illustré par la figure 7a, comportant en outre un deuxième lecteur de modules de sécurité. Dans ce cas, le module de sécurité ICC1 esclave associé au décodeur peut être laissé dans le décodeur. Le deuxième lecteur quant à lui peut recevoir le module de sécurité maître ICC1 ou le module contrat lorsque ce module doit être utilisé.

La figure 7c illustre un mode de réalisation dans lequel le décodeur comporte d'une part un lecteur pour un module de sécurité ICC_{C} et d'autre part, un module de sécurité intégré ICC1 dans le décodeur et réalisé sous la forme d'un boîtier électronique conventionnel. En fonctionnement normal, le module de sécurité intégré au décodeur est généralement utilisé. Lorsque le compteur doit être réinitialisé, le module de sécurité extérieur est utilisé. Ce module de sécurité est par définition un module contrat. Ce mode de réalisation permet également d'utiliser le module amovible lorsque le module interne n'est plus opérationnel, par exemple suite à un changement important des fonctions effectuées par ce module.

La figure 7d est similaire à la figure 7c, la différence étant que le module de sécurité ICC1 interne est intégré dans l'un des circuits intégrés du module de désembrouillage D.

Les fonctions du module de sécurité peuvent également être intégrée dans le module de désembrouillage D.

Dans la description ci-dessus, il a été admis que le premier module de sécurité ICC1 est le module maître dans le cas où l'abonné ne dispose pas de module contrat. Dans le cas où il dispose d'un module contrat, ce dernier jouera le rôle de maître. Pour cette raison, sauf mention explicite dans le texte, le module de sécurité maître peut être l'un des modules de sécurité appariés à un décodeur, auquel a été attribuée la fonction de maître, ou le module contrat.

## Revendications

1. Décodeur destiné au traitement de données de télévision à péage, **caractérisé en ce qu'**il comporte des moyens d'activation/désactivation du traitement des données de télévision à péage et un compteur agissant sur lesdits moyens d'activation/désactivation.

2. Décodeur selon la revendication 1, **caractérisé en ce qu'**il comprend une valeur de désactivation et des moyens de comparaison avec ledit compteur.

3. Décodeur selon la revendication 1, **caractérisé en ce que** la valeur de désactivation est une durée, une date ou une valeur numérique.

4. Décodeur selon la revendication 1, **caractérisé en ce qu'**il comprend des moyens de réception d'une commande agissant sur l'état dudit compteur.

5. Décodeur selon la revendication 4 connecté localement à un module de sécurité, **caractérisé en ce que** lesdits moyens de réception reçoivent dudit module de sécurité, une commande agissant sur l'état dudit compteur.

6. Système de gestion de données de télévision à péage comportant au moins deux décodeurs, **caractérisé en ce que** les décodeurs contiennent chacun des moyens d'activation/désactivation du traitement des données de télévision à péage et un compteur agissant sur lesdits moyens d'activation/désactivation, ce système comprenant au moins deux modules de sécurité destinés à être localement connectés auxdits décodeurs, au moins un des modules de sécurité étant déclaré maître et comprenant des moyens pour réinitialiser lesdits compteurs des décodeurs.

7. Système de gestion d'accès selon la revendication 6, **caractérisé en ce qu'**au moins un des modules de sécurité ne comprend pas des moyens de réinitialisation desdits compteurs.

8. Système de gestion d'accès selon la revendication 6, **caractérisé en ce qu'**il comporte un module de sécurité supplémentaire par rapport au nombre de décodeurs, ce module de sécurité supplémentaire comprenant les moyens pour réinitialiser lesdits compteurs des décodeurs.

9. Procédé de gestion d'au moins deux décodeurs destinés au traitement de données de télévision à péage, lesdits décodeurs étant associés à un abonné et comportant des moyens d'activation/désactivation du traitement des données de télévision à péage et un compteur agissant sur lesdits moyens d'activation/désactivation, chaque abonné disposant d'au moins deux modules de sécurité pouvant être localement connectés à un décodeur, ce procédé comprenant les étapes de :
- détermination d'au moins un module de sécurité maître parmi les modules de sécurité appartenant à un abonné,
- mémorisation dans chaque décodeur de l'abonné, d'un élément d'identification du module de sécurité maître,
- désactivation par le compteur du décodeur du traitement des données selon au moins un critère prédéfini,
- réinitialisation du compteur par l'introduction du module de sécurité maître dans le décodeur désactivé.

10. Procédé selon la revendication 9, **caractérisé en ce qu'**il comporte une étape de vérification de la conformité de l'élément d'identification du module de sécurité maître.

11. Procédé selon la revendication 10, **caractérisé en ce que** l'étape de vérification de la conformité du module de sécurité maître comporte une étape d'authentification d'un numéro d'identification unique dudit module de sécurité au moyen d'une clé d'appariement entre ce module de sécurité maître et le décodeur à réactiver.

12. Procédé selon la revendication 9, **caractérisé en ce que** la désactivation du traitement des données est faite de plus par l'envoi d'un message à au moins l'un des décodeurs de l'abonné, ce message étant envoyé par un centre de gestion.

13. Procédé selon la revendication 9, **caractérisé en ce que** la réinitialisation du compteur est effectuée sur la base d'une valeur de désactivation mémorisée dans chaque décodeur.

14. Procédé selon la revendication 13, **caractérisé en ce que** ladite valeur de désactivation est transmise aux décodeurs au moyen d'une commande d'autorisation EMM.

15. Procédé selon la revendication 9, le décodeur étant connecté à un module de sécurité esclave non autorisé à réinitialiser le compteur dudit décodeur, **caractérisé en ce qu'**il comprend les étapes suivantes :
- mémorisation de l'activité du traitement des données de télévision à péage dans le décodeur,
- détection de l'insertion du module de sécurité maître,
- transfert des données de l'activité du traitement dans ce module de sécurité maître.

16. Procédé selon les revendications 9 ou 15, **caractérisé en ce que** l'on transmet les données de traitement mémorisées dans le module de sécurité maître à un centre de gestion.

17. Procédé selon la revendication 16, **caractérisé en ce que** l'on transmet des données de service liées à chaque abonné audit centre de gestion.
